Europäisches Patentamt

European Patent Office

Office européen des brevets

(11) Numéro de publication: **0 234 982 B1**

# FASCICULE DE BREVET EUROPEEN

(45) Date de publication de fascicule du brevet:
**17.07.91**

(51) Int. Cl.5: **G03H 1/04**, G01B 9/021

(21) Numéro de dépôt: **87400117.5**

(22) Date de dépôt: **19.01.87**

(54) **Dispositif de contrôle non-destructif d'une pièce par holographie optique.**

(30) Priorité: **20.01.86 FR 8600701**

(43) Date de publication de la demande:
**02.09.87 Bulletin 87/36**

(45) Mention de la délivrance du brevet:
**17.07.91 Bulletin 91/29**

(84) Etats contractants désignés:
**CH DE FR GB IT LI NL**

(56) Documents cités:
**DE-A- 2 620 755**
**FR-A- 2 543 299**

**OPTICAL ENGINEERING, vol. 24, no. 5, septembre/octobre 1985, pages 746-753, Society of Photo-Optical Instrumentation Engineers, Bellingham, Washington, US; B. TOZER et al.: "Holography applied to inspection and measurement in an industrial environment"**

**LASER FOCUS, vol 20, no. 6, Juin 1984, pages 30,32, Newton, MA, US; "French company uses holographic testing technique"**

**OPTICAL ENGINEERING, vol. 24, no. 4,** ·

**Juillet/Août 1985, pages 645-649, Society of Photo-Optical Instrumentation Engineers, Bellingham, Washington, US; H. BJELKHAGEN: "Pulsed fiber holography: a new technique for hologram interferometry"**

(73) Titulaire: **SOCIETE NATIONALE INDUSTRIELLE AEROSPATIALE Société dite:**
**37 Boulevard de Montmorency**
**F-75781 Paris Cedex 16(FR)**

(72) Inventeur: **Bouteyre, Jacques**
**31, rue Gustave Gaillard**
**F-33160 Saint Medard en Jalles(FR)**
Inventeur: **Le Floc'h, Christian**
**Résidence Dulamon Bât. A N.44**
**F-33290 Blanquefort(FR)**

(74) Mandataire: **Mongrédien, André**
**c/o SOCIETE DE PROTECTION DES INVENTIONS 25, rue de Ponthieu**
**F-75008 Paris(FR)**

## Description

La présente invention a pour objet un dispositif de contrôle non-destructif d'une pièce par holographie optique présentant une souplesse d'utilisation améliorée par rapport aux dispositifs de l'art antérieur.

On rappelle que l'holographie est une méthode de photographie en relief utilisant les interférences produites par deux faisceaux de lumière cohérente. Ces deux faisceaux sont obtenus par séparation d'une émission laser. Le point de séparation détermine le départ des deux faisceaux vers un plan film. Le premier faisceau, dirigé vers l'objet et rétrodiffusé par ce dernier vers le plan film, est appelé "faisceau objet" et le second faisceau est appelé "faisceau de référence". Les parcours des deux faisceaux depuis le point de séparation jusqu'au plan film sont de même longueur et l'objet à observer doit être situé à l'intérieur de la longueur de cohérence du laser. Ces deux faisceaux interfèrent sur un plan film, codant ainsi en amplitude la différence de marche induite par le relief de l'objet. Le plan film est ensuite développé et on l'observe en l'éclairant au moyen d'un faisceau laser sous la même incidence. Grâce aux interférences qui ont impressionné le film, l'observateur peut voir en relief l'objet qui a été photographié.

Lorsqu'on désire utiliser l'holographie pour le contrôle non-destructif d'une pièce mécanique, on superpose un premier hologramme de l'objet sous un certain état de contrainte et un deuxième hologramme de l'objet sous un autre état de contrainte. En général, le premier état correspond à une absence de contrainte tandis que, dans le deuxième état, la pièce subit des contraintes de traction ou des contraintes dues, par exemple, à la pression d'un gaz. s'il y a des anomalies, celles-ci sont mises en évidence par des singularités dans le jeu de franges de l'interférogramme lu par le contrôleur. On appelle "interférogramme" l'image obtenue par la superposition des hologrammes de la pièce sous deux états de contrainte différents. Il est ainsi possible de détecter des défauts tels que failles, fissures, décollements sur des pièces massives pleines ou creuses.

Pour les pièces creuses, il est souvent nécessaire de rechercher les défauts à l'intérieur des cavités. Or, dans les bancs de contrôle holographique habituellement utilisés, le laser et la caméra holographique sont solidaires et indissociables, ce qui rend ces dispositifs lourds et encombrants. On ne peut donc les utiliser que pour examiner des cavités de grandes dimensions. De plus, dans une position donnée, on ne couvre qu'une surface assez limitée. Pour agrandir le champ d'investigation, il faut soit déplacer la pièce à contrôler et/ou le dispositif de contrôle, ce qui est très difficile à cause du poids et de l'encombrement de ces éléments, soit utiliser plusieurs dispositifs de contrôle, ce qui augmente le coût de l'installation.

Dans la demande de brevet français n° 84 11450 déposée le 19 juillet 1984 au nom de la demanderesse, correspondant à la demande EP-A-0 169 143 qui appartient à l'art antérieur selon l'article 54(3) de la CBE, on apporte une solution à ces problèmes en proposant un dispositif de contrôle non destructif par holographie optique dans lequel la caméra est séparée de la source laser, le faisceau étant transmis de la source à la caméra à l'aide d'un ensemble de miroirs ou de prismes. Cette disposition permet d'introduire la caméra dans des cavités de petites dimensions pour lesquelles l'utilisation des dispositifs de l'art antérieur ne serait pas possible. De plus, l'ensemble présente une certaine souplesse qui permet de nombreuses observations, même sur des pièces de formes complexes, car on ne déplace que la caméra.

Cependant, si on améliore la souplesse d'utilisation par rapport aux dispositifs classiques, ce dispositif présente encore quelques inconvénients. En effet, il est nécessaire de régler de manière très précise la position des miroirs et/ou des prismes afin de bien positionner le faisceau à l'entrée de la caméra. S'il est nécessaire de modifier la position relative de la source et de la caméra, il est nécessaire de régler à nouveau la position des différents miroirs, ce qui peut entraîner des pertes de temps importantes.

Par ailleurs, on connait des dispositifs dans lesquels on utilise des fibres optiques soit sur le faisceau de référence, soit sur le faisceau objet, ou éventuellement sur les deux. Dans certains cas, on utilise des fibres dites "monomodes" qui sont bien adaptées pour la conservation de la cohérence temporelle et spatiale du faisceau laser, mais ne permettent pas le transport d'énergie. Les fibres dites "multimodes" permettent dans une certaine mesure le transport de puissance, mais elles dégradent le front d'ondes qui permet d'engendrer les interférences pour la réalisation des hologrammes. Si de telles fibres conviennent lorsqu'on peut se contenter d'hologrammes de qualité moyenne, elles ne sont plus utilisables pour la réalisation d'interférogrammes lisibles, car les sauts de mode provoqués par de légers mouvements de la fibre entraînent des différences d'énergie entre les deux prises de vue qui altèrent le contraste des franges d'interférences.

Le document "Holography applied to inspection and measurement in an industrial environment" publié dans Optical Engineering, vol. 24, n° 5, septembre/octobre 1985, pages 746-753, mentionne qu'on peut transporter des images par un faisceau de fibres optiques ou par une fibre optique monomode.

La présente invention a pour but de remédier aux inconvénients ci-dessus en proposant un dispositif de contrôle non-destructif d'une pièce par holographie optique qui permet de modifier la position relative de la source laser et de la caméra sans avoir à effectuer de réglage des miroirs et/ou prismes, tout en permettant de réaliser des interférogrammes de grande qualité.

Le dispositif objet de l'invention comprend, de manière connue (cf le document DE-A-2 620 755) :
- une source émettant un faisceau laser ;
- une caméra holographique placée à distance de ladite source, cette caméra comprenant au moins :
  - une entrée pour le faisceau laser ;
  - des moyens pour séparer le faisceau laser en un faisceau de référence et un faisceau objet ; et
  - des moyens pour créer un hologramme de la pièce à contrôler à partir du faisceau de référence et du faisceau objet ; et
- des moyens pour amener le faisceau laser de la source jusqu' à ladite entrée, constitués par un guide de lumière à fibres optiques.

Selon l'invention, ledit guide à fibres optiques est constitué par un faisceau de fibres optiques ordonnées, dans lequel chacune des fibres reste dans la même position relative par rapport aux fibres voisines tout le long dudit faisceau et chacune des fibres est choisie de façon à se rapprocher le plus possible du fonctionnement monomode de manière que ledit faisceau de fibres soit apte à transmettre un faisceau laser de forte puissance (de l'ordre de 10 joules) tout en maintenant la cohérence temporelle et spatiale de ce faisceau laser.

L'expression "fibres optiques ordonnées" utilisée dans la présente description signifie que la position relative d'une fibre par rapport aux fibres voisines reste la même tout le long du faisceau.

Ainsi, on peut modifier la position relative de la source laser et de la caméra sans avoir à effectuer des opérations longues et délicates comme le réglage de la position de miroirs, puisque le faisceau est transmis à travers un cordon souple dont une extrémité est fixée à la source et l'autre à la caméra.

De manière avantageuse, le dispositif peut être équipé d'une lentille convergente placée à l'entrée du faisceau de fibres optiques et/ou d'une lentille convergente placée à la sortie du faisceau.

Dans l'invention, le nombre de fibres dans le faisceau est supérieur ou égal à 100 et peut même être plus élevé, par exemple de l'ordre de 100 000. Quant au diamètre des fibres, il est compris entre 2 et 15 $\mu$m, par exemple de l'ordre de 10 $\mu$m.

L'insertion de fortes énergies, contrairement aux autres procédés qui nécessitent une focalisation du faisceau sur l'entrée de fibre, ne pose pas de problème. En effet, les procédés avec focalisation à fortes énergies entraînent une ionisation de l'air (plasma) provoquant des claquages de celui-ci qui détruisent la fibre. Dans notre cas, une simple convergence du faisceau laser est suffisante du fait des dimensions de la section du faisceau de fibres. Quant à la lentille éventuellement placée à la sortie du faisceau de fibres, elle permet de rendre le faisceau laser parallèle de façon à compenser la divergence induite par l'ouverture numérique du faisceau de fibres.

De préférence, on utilise des fibres dont chacune est constituée par un coeur en verre entouré d'une gaine en un verre ayant un indice de réfraction inférieur à celui du verre constituant le coeur.

L'invention apparaîtra mieux à la lecture de la description qui va suivre, donnée à titre d'exemple purement illustratif et nullement limitatif, en référence aux dessins annexés dans lesquels :
- la figure 1 est une vue schématique en perspective de l'ensemble du dispositif objet de l'invention montrant la source laser et la caméra reliées par un faisceau de fibres optiques,
- la figure 2 est une vue schématique en perspective illustrant le cheminement du faisceau laser depuis la source jusqu'à la caméra et à l'objet à contrôler,
- la figure 3 est une vue schématique en élévation et en coupe d'une caméra pouvant être utilisée dans l'invention, reliée à une source laser par un faisceau de fibres optiques,
- la figure 4 est une vue de dessus de cette même caméra suivant la flèche F de la figure 3,
- la figure 5 est une vue en perspective du boîtier enregistreur équipant ladite caméra,
- les figures 6a à 6h sont des vues schématiques illustrant les différentes étapes de la prise de vue d'un interférogramme,
- la figure 7 est une vue schématique en élévation montrant comment un contrôleur observe les interférogrammes, et
- la figure 8 est une vue schématique en coupe d'un faisceau de fibres optiques utilisé dans l'invention.

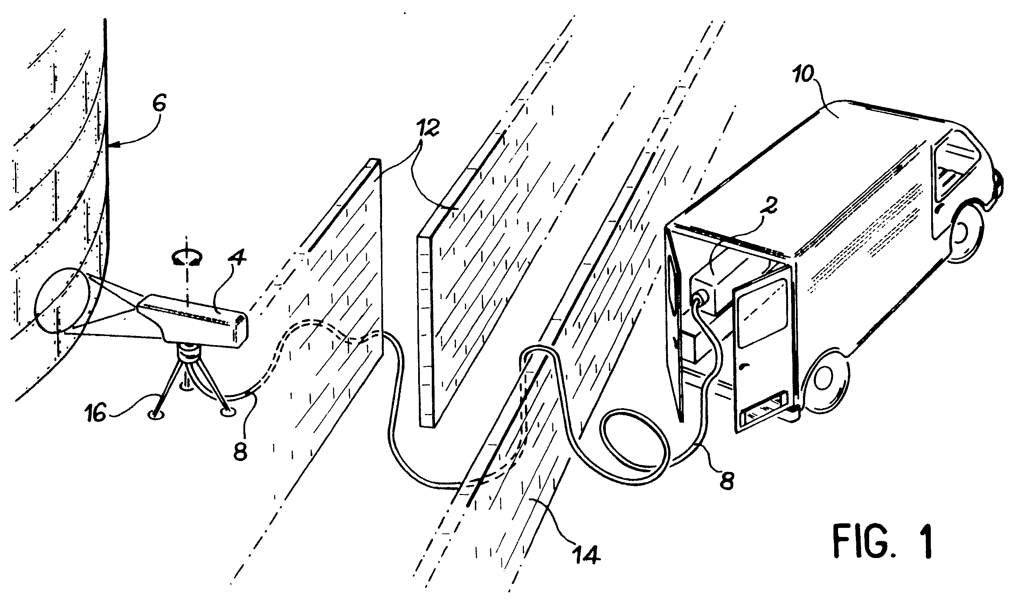

Si l'on se reporte à la figure 1, on voit que le dispositif de contrôle par holographie optique objet de l'invention se compose d'une source laser 2 reliée à une caméra holographique 4 placée au voisinage de la pièce à contrôler 6 par un faisceau de fibres optiques ordonnées 8. Il s'agit d'un faisceau de fibres optiques tels que ceux qui sont également désignés dans le domaine considéré par "réseau cohérent de fibres" ou par "guide d'image souple". Cette disposition permet une grande souplesse d'utilisation puisque le faisceau 8 a une première extrémité fixée à la source laser 2 et son autre extrémité à la caméra 4. On peut donc déplacer la source 2 et la caméra 4 l'une par rapport à l'autre sans avoir à effectuer de réglage puisque le faisceau laser est transmis à travers le câble 8 quelle que soit la position de celui-ci dans l'espace. Cette disposition permet par exemple de monter la source laser 2 sur un véhicule 10, et permet d'utiliser le dispositif même si la pièce à contrôler 6 est séparée de la source laser 2 par des obstacles, par exemple les parois verticales 12 que l'on peut contourner en posant le câble 8 sur le sol. Le câble peut également passer par dessus un obstacle tel que le mur 14.

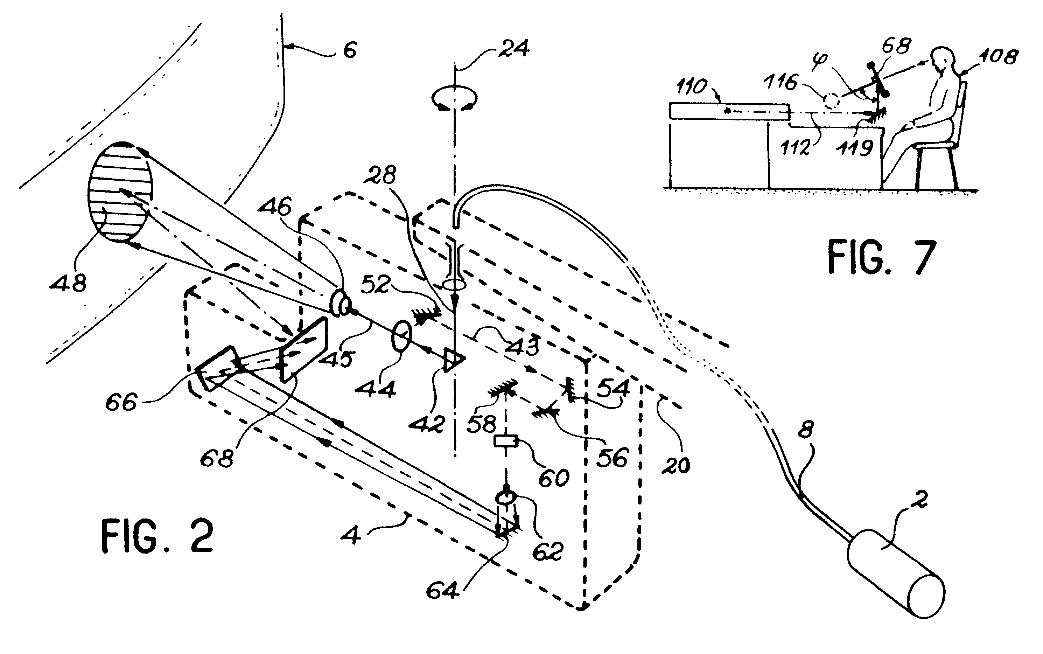

Dans le cas de le figure 1, la caméra 4 est montée sur un support 16 placé sur le sol, mais on ne sortirait pas du cadre de l'invention en utilisant un autre montage. Par exemple, la caméra peut être accrochée à un support 20 (figures 2 à 4) tout en étant mobile en rotation autour d'un axe confondu avec l'axe du faisceau laser entrant dans la caméra.

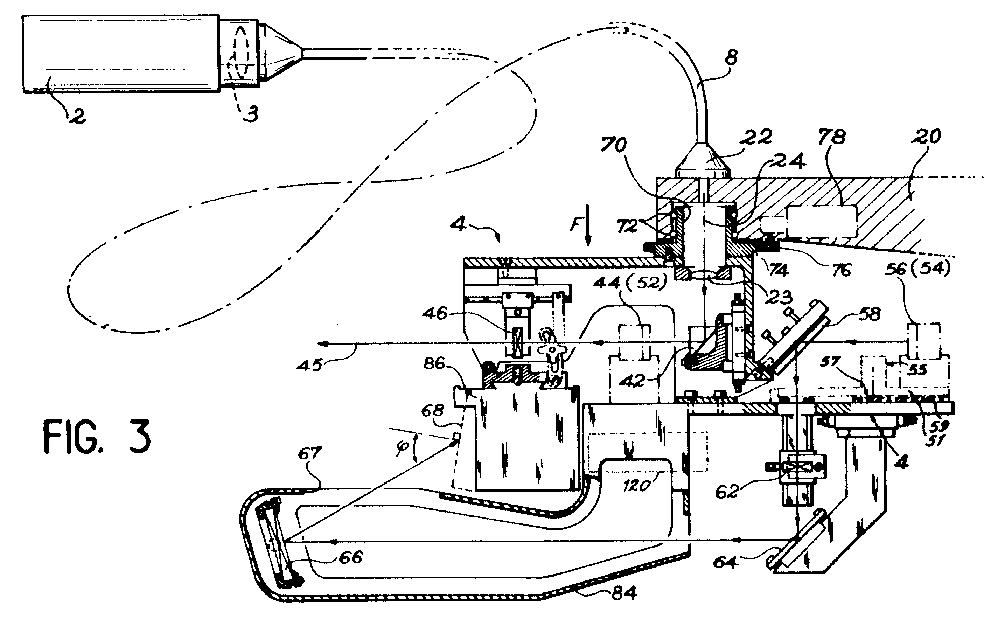

Si l'on se reporte à la figure 2, on voit la source laser 2 reliée à la caméra 4, représentée schématiquement en traits interrompus, par le câble à fibres optiques 8. Ce dernier est fixé à la caméra par un montage qui sera décrit ultérieurment, en référence à la figure 3. Le montage est tel que le faisceau laser 28 entre dans la caméra 4 en suivant un trajet qui coïncide avec l'axe de rotation 24 de la caméra par rapport au support 20.

Le faisceau 28, après avoir pénétré dans la caméra, rencontre un prisme 42 qui le réfléchit et le renvoie suivant une direction approximativement horizontale sur une séparatrice 44 : cette dernière prélève une partie du faisceau qui constituera le faisceau de référence 43 tandis qu'une autre partie, traversant sans déviation la séparatrice 44, constitue le faisceau objet 45. Le faisceau objet 45 est conditionné par un ensemble de lentilles 46 et vient frapper une zone 48 sur la pièce à contrôler 6. Le faisceau objet est rétrodiffusé par la surface 48 et il vient frapper le plan film 68 où il interfère avec le faisceau de référence.

Dans le cas particulier décrit ici, le faisceau de référence sortant de la séparatrice 44 rencontre d'abord trois miroirs 52, 54, 56 qui le dévient dans un plan horizontal, puis le miroir 58 le dévie suivant une direction verticale : sur cette portion du trajet, le faisceau est conditionné par un filtre 60 et une lentille 62 avant d'être dévié suivant une direction horizontale par un miroir 64. Le faisceau frappe ensuite un miroir 66 qui le renvoie sur le film photosensible ou plan-film 68. Cette disposition autorise la compacité optimum de la caméra. L'orientation du miroir 66 et du film 68 est telle que le faisceau de référence frappe ce dernier sous un angle identique à celui sous lequel il sera éclairé ultérieurement par un faisceau laser lorsqu'un contrôleur procèdera aux observations.

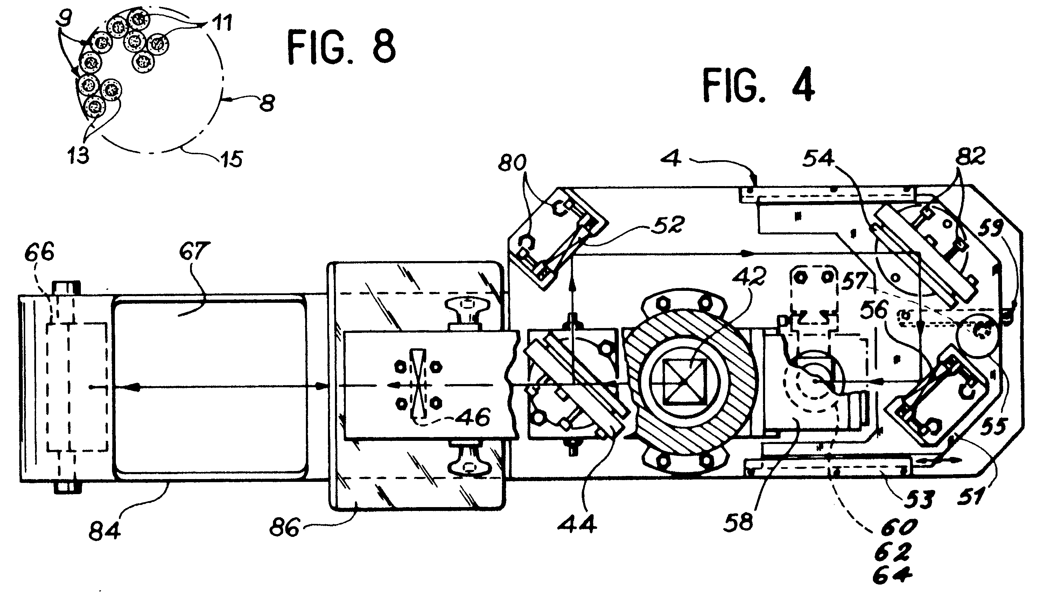

La constitution de la caméra apparaît mieux sur les figures 3 et 4 où l'on voit qu'elle est équipée d'un palier 70 (figure 3) monté sur la potence 20 au moyen de roulements à billes 72. Le palier 70 comporte une couronne dentée 74 qui coopère avec un pignon 76 lui-même mis en mouvement par un moteur 78 : cette disposition permet la rotation de la caméra autour de l'axe 24, mais on ne sortirait pas du cadre de l'invention en utilisant d'autres moyens de mise en rotation, y compris une rotation manuelle.

On voit encore sur la figure 3 la source laser 2 reliée à la caméra 4 par le faisceau de fibres optiques 8. Une lentille 3, montée sur la source laser 2, permet de faire converger le faiscau avant qu'il n'entre dans la câble 8. L'autre extrémité du câble est fixée dans un dispositif de maintien 22 lui-même monté sur le support 20. Une lentille de convergence 23, placée au voisinage de l'extrémité inférieure du palier 70, permet de rendre parallèle le faisceau à la sortie du câble 8, car il a tendance à diverger du fait de son trajet dans le câble. Bien entendu, il ne s'agit là que d'un exemple de réalisation et on ne sortirait pas du cadre de l'invention en utilisant un autre montage. Il faut cependant que le faisceau sorte du câble 8 avant qu'il ne rencontre la séparatrice 44 pour éviter les inconvénients des dispositifs de l'art antérieur qui ont été décrits ci-dessus. Et, dans le cas où la caméra est montée à rotation sur un support, il faut veiller à ce que le faisceau entrant dans la caméra soit confondu avec l'axe de rotation.

On voit également sur les figures 3 et 4 la séparatrice 44 qui prélève le faisceau de référence ainsi que les miroirs 52 à 66 qui le dévient jusqu'au plan film 68. Chacun de ces miroirs est équipé de vis qui permettent d'en régler la position comme, par exemple, les vis 80 du miroir 52 ou les vis 82 du miroir 54. On comprend qu'il est possible de faire varier la longueur du faisceau de référence en jouant sur les positions relatives des différents miroirs à l'intérieur du volume de la caméra. Ainsi, si on fait varier la distance de la caméra à l'objet, et par conséquent la longueur du faisceau objet, on fera varier la longueur du faisceau de référence dans les mêmes proportions. On peut voir encore sur la figure 3 que la caméra comporte à sa partie inférieure un bras 84, le miroir 66 étant placé à l'extrémité avant du bras 84. Cette disposition a pour but de renvoyer le faisceau réfléchi par le miroir 66 sur le plan film 68 sous un angle correspondant à l'angle d'observation par le contrôleur une fois que les interférogrammes ont été réalisés, le faisceau passant à travers une ouverture 67 prévue dans le bras 84. On peut voir également que le boîtier enregistreur 86, qui contient le plan film 68, est placé au-dessus du bras 84 de manière à ce que le plan film reçoive directement le faisceau rétrodiffusé par l'objet.

La figure 7 montre comment un contrôleur observe les interférogrammes après développement du film. Le contrôleur 108 est assis, ce qui représente la position d'observation la plus naturelle. Une source laser 110 émet un faisceau horizontal 112 qui est renvoyé dans une direction verticale par un miroir ou un prisme 119 et frappe le plan-film 68. Ce dernier étant incliné par rapport à la verticale pour faciliter l'observation, le faisceau 112 frappe le plan-film 68 sous un angle $\gamma$ égal à celui sous lequel il le frappait dans la caméra (figure 3). L'observateur voit sans problème en relief l'image virtuelle 116 de l'objet à contrôler. De plus, cette disposition offre un autre avantage car le faisceau laser réfléchi par le miroir passe verticalement devant le visage du contrôleur sans éblouir celui-ci.

La valeur de l'angle $\gamma$ est comprise entre 30 et 50°, de préférence entre 33 et 39°. Ces valeurs résultent d'un compromis entre plusieurs exigences. En effet, l'angle $\gamma$ doit permettre un bon rendement du film sensible, c'est-à-dire permettre d'obtenir des interférences suffisamment visibles. De plus, il faut assurer un bon confort de l'opérateur, c'est-à-dire que celui-ci doit pouvoir déplacer son visage pour observer l'interférogramme sans risquer d'être ébloui par le faisceau laser utilisé pour l'observation. Enfin, on est limité par la constitution mécanique de la caméra. Les inventeurs ont trouvé qu'on obtenait un compromis satisfaisant en donnant à l'angle $\gamma$ une valeur comprise entre 30 et 50° et de préférence entre 33 et 39°. On a réalisé une caméra dans laquelle, toutes choses restant égales par ailleurs, on pouvait faire varier la position du plan-film dans une plage de 6°, mais on ne sortirait pas du cadre de l'invention en modifiant la valeur de cette plage ou même en utilisant un système dans lequel la position du film serait fixée une fois pour toutes. Quant à la disposition illustrée à la figure 7, ce n'est qu'un exemple et on peut utiliser d'autres montages pour la transmission du faisceau laser 112, par exemple une source émettant directement un faisceau laser vertical. L'essentiel est que l'angle sous lequel le faisceau 112 frappe le film soit égal à l'angle sous lequel le faisceau de référence frappe le film à l'intérieur de la caméra.

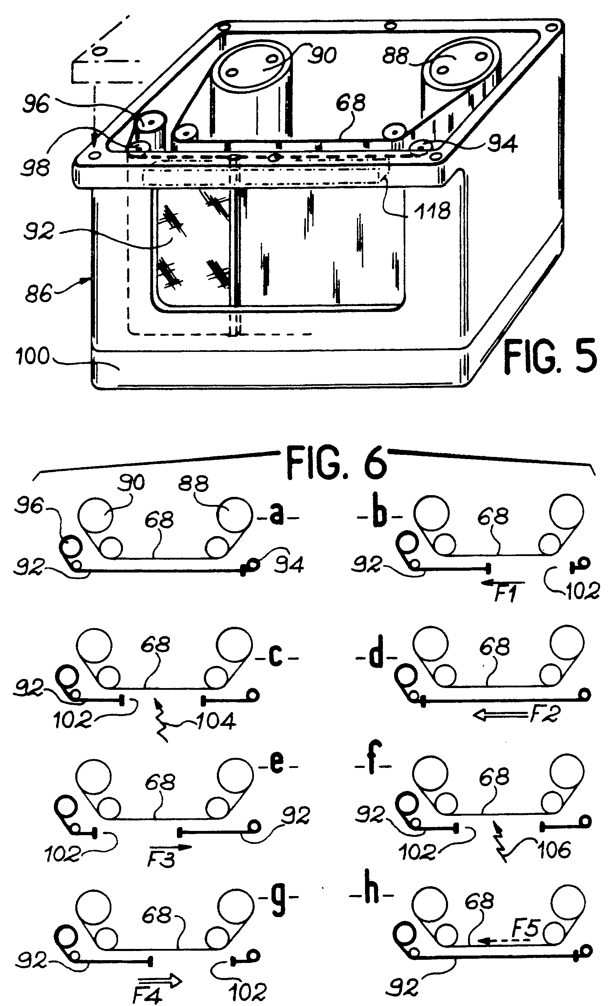

La vue en perspective de la figure 5 montre le boîtier enregistreur 86 qui comporte, de manière classique, un plan film 68 qui se déroule entre une bobine émettrice 88 et une bobine réceptrice 90. Un obturateur 92, équipé d'une fenêtre, peut se déplacer suivant un mouvement de va-et-vient devant le plan film, comme cela sera expliqué plus en détail ci-après en référence aux figures 6a à 6h.

L'obturateur 92 est monté sur deux bobines 94 et 96 et guidé par un axe 98. On voit également, à la partie inférieure du boîtier, un dispositif de contrôle électronique 100 qui commande le déroulement des prises de vue. De plus, un dispositif 118 de marquage du film, par exemple un dispositif alphanumérique LED, permet l'identification des prises de vue.

Ce cycle automatique est illustré aux figures 6a à 6h. La figure 6a illustre la position de départ dans laquelle l'obturateur 92 est placé devant le film 68 et empêche un faisceau de lumière parasite d'impressionner celui-ci. Lorsque le boîtier reçoit, par exemple d'un automate programmable pilotant l'ensemble du dispositif, l'ordre de procéder à la première exposition servant à la réalisation d'un interférogramme, le boîtier se donne à lui-même l'ordre d'ouvrir l'oburateur et celui-ci se déplace dans le sens de la flèche F1 (figure 6b) c'est-à-dire de la droite vers la gauche en regardant la figure. Ceci a pour effet d'amener l'ouverture ou fenêtre 102 prévue dans l'obturateur devant le film 68. On arrive ainsi à la position de la figure 6c où l'ouverture 102 est entièrement devant le film 68. A ce moment, le boîtier envoie l'ordre de déclenchement du faisceau laser et le film est impressionné par le faisceau de référence et le faisceau objet, comme cela est représenté schématiquement par la flèche en ligne brisée 104. Le boîtier se donne ensuite l'ordre de fermeture de l'obturateur et ce dernier se déplace dans le sens de la flèche F2 de la figure 6d, c'est-à-dire encore de la droite vers la gauche en regardant le dessin. Si la première vue a été prise alors que l'objet à contrôler n'était pas sous contrainte, le boîtier envoie l'ordre de mise en contrainte de l'objet par un dispositif approprié.

Lorsque l'objet est mis sous contrainte, le boîtier reçoit l'ordre de procéder à la deuxième exposition et se donne l'ordre d'ouvrir l'obturateur. Ce dernier se déplace alors dans le sens de la flèche F3 (figure 6e) c'est-à-dire de la gauche vers la droite. Ceci a pour effet de ramener l'ouverture 102 devant le plan film 68 et l'on arrive à la position de la figure 6f qui est la même que celle de la figure 6c. Lorsque la position de la figure 6f est atteinte, le boîtier envoie l'ordre de déclenchement du laser et le film est impressionné par la lumière laser comme cela est symbolisé par la flèche en ligne brisée 106 de la figure 6f. Ensuite, le boîtier se donne l'ordre de fermeture de l'obturateur et ce dernier se déplace dans le sens de la flèche F4 (figure 6g) c'est-à-dire de la gauche vers la droite. On arrive ainsi à la position de la figure 6h, qui est la même que celle de la figure 6a, avec l'obturateur fermé. A ce moment, le boîtier se donne l'ordre d'avancer le film d'une vue, comme cela est symbolisé par la flèche F5 en traits interrompus sur la figure 6h, puis, si l'on désire continuer le contrôle en observant une autre partie de la pièce à examiner, le boîtier envoie un ordre de déplacer la caméra ou l'objet, par exemple par rotation de celle-ci autour de l'axe vertical 24. On peut également déplacer simultanément la caméra et l'objet. Le boîtier peut encore donner l'ordre de remettre la pièce dans un état non contraint et l'on recommence le cycle.

Le plan film 68 peut être un film de type courant ou un film thermoplastique. Dans ce dernier cas, par association avec une lecture vidéo, par exemple le dispositif 120 représenté schématiquement en traits mixtes sur la figure 3, et mémorisation d'images, on peut effectuer un examen pratiquement immédiat ou légèrement différé sans perdre les avantages de l'automatisation, le temps s'écoulant entre la prise de vue et l'observation del'interferogramme étant de quelques secondes. Dans le cas d'utilisation d'un film thermoplastique, ce dernier est d'abord sensibilisé par dépôt de charges électriques par effet Corona (phase de sensibilisation). Le film est ensuite exposé à la lumière, ce qui provoque des déséquilibres de charges créant des forces électrostatiques dont la distribution est une réplique de la distribution d'intensité lumineuse résultant des interférences entre les deux faisceaux. Le développement de l'hologramme consiste à chauffer le film de sorte que le thermoplast se déforme sous l'effet des forces électrostatiques. La fixation est instantanée puisque le film se durcit en revenant à la température ambiante. L'hologramme (ou l'interférogramme) ainsi réalisé se présente comme une variation d'épaisseur d'un matériau transparent : c'est un hologramme de phase.

Le dispositif objet de l'invention peut être utilisé suivant trois modes de fonctionnement :
- le mode manuel,
- le mode automatique, et
- le mode semi-automatique.

Dans le mode manuel, on accède à toutes les fonctions indépendamment les unes des autres par intervention sur des boutons-poussoirs. Ce mode sert essentiellement à une phase de mise au point ou au contrôle d'un élément de l'installation ou au contrôle de pièces non standard. Le mode automatique est le mode normal de fonctionnement. Dans ce cas, l'opérateur n'intervient qu'une fois pour déclencher l'ensemble du cycle automatique. Le mode semi-automatique découpe le fonctionnement automatique en pas successifs, l'opérateur n'intervenant que pour sauter au pas suivant. Ce mode de fonctionnement permet essentiellement de contrôler le programme automatique ou d'en modifier une partie.

La gestion de l'ensemble est réalisée grâce à un système programmable, qui peut être un automate programmable comme, par exemple, l'automate PB 100 commercialisé par la Société MERLIN-GERIN. Celui-ci se présente sous la forme d'un coffret métallique contenant des connecteurs destinés à l'embrochage des sous-ensembles et des borniers permettant de raccorder l'automate aux différents capteurs et actionneurs qui équipent le dispositif. Les sous-ensembles embrochables comprennent une unité centrale qui pilote le fonctionnement de l'automate et gère les échanges entre les divers sous-ensembles, des cartes d'entrées qui réalisent l'acquisition des informations "tout ou rien" provenant des différents capteurs, et des cartes de sortie qui transmettent aux actionneurs les ordres "tout ou rien" élaborés par l'automate. Tous ces sous-ensembles sont intercommutés par un bus servant de support aux échanges d'informations. Cet ensemble est complété par une console de maintenance et de programmation qui permet à l'opérateur de dialoguer avec l'automate. Reliée directement à l'unité centrale, cette console permet l'introduction du programme dans la mémoire de l'automate et sa mise au point. Elle sert également à vérifier ou à modifier un programme déjà existant. Le programme une fois écrit peut être sauvegardé par enregistrement sur une cassette. La console est bien entendu déconnectée en service normal puisque c'est l'automate qui gère et commande l'ensemble des opérations.

Bien entendu, on peut utiliser à cette fin d'autres dispositifs qu'un automate programmable : par exemple, un dispositif fondé sur l'emploi de microprocesseurs répondrait également aux besoins.

Il est bien entendu que l'invention ne se limite pas au seul mode de réalisation qui vient d'être décrit ici, mais qu'on peut envisager des variantes sans sortir pour autant du cadre de l'invention. C'est ainsi que, suivant les cas, l'homme de l'art pourra faire varier le nombre et la position des prismes ou des miroirs servant à dévier le faisceau de référence en fonction de l'utilisation envisagée. Il faut remarquer que la distance entre la caméra et la surface à examiner doit être telle que cette dernière se trouve à l'intérieur du "volume de cohérence" c'est-à-dire dans l'espace qui permet d'obtenir des interférences sur le plan film entre le faisceau de référence et le faisceau objet. De nombreuses possibilités peuvent être mises en oeuvre pour observer la plus grande surface possible de la pièce notamment si celle-ci est creuse, par exemple: rotation de la pièce autour d'un axe horizontal, combinée ou non avec une rotation de la caméra autour d'un axe vertical, ou encore rotation de la caméra autour d'un axe horizontal. On peut également ajouter des déplacements en translation de la caméra, que ceux-ci soient effectués en mode manuel ou automatique. Ceci peut entraîner la nécessité de déplacer et de régler à nouveau les miroirs ou prismes qui déterminent la longueur du faisceau de référence. Cette dernière opération peut aussi être automatisée et donc liée à l'automate. Ainsi, l'automate commande à distance des moteurs associés à chaque dispositif, coulissant, support des miroirs 52 à 66. On obtient ainsi la variation de longueur du faisceau de référence par déplacement des miroirs ou prismes 52 et 54 ou 54 et 56 ou encore 52, 54 et 56.

Les figures 3 et 4 illustrent un exemple de mécanisme d'entraînement apte à déplacer simultanément les miroirs (ou prismes) 54 et 56 suivant la direction longitudinale de la caméra. On voit que ces deux miroirs sont montés sur un plateau coulissant 51 pouvant se déplacer longitudinalement par rapport à la caméra en étant guidé par des glissières 53. Le déplacement est obtenu grâce à un moteur 55, lui-même monté sur le plateau 51, et qui entraîne un pignon 57, lequel coopère avec une crémaillère 59 fixée à la caméra 4 . On peut également prévoir un système semblable pour déplacer simultanément les miroirs 52 et 54 dans la direction transversale de la caméra ou un système plus complexe pour déplacer les trois miroirs 52, 54 et 56. Bien entendu, il ne s'agit là que d'un exemple de réalisation et on ne sortirait pas du cadre de l'invention en utilisant un autre type de mécanisme d'entraînement pour déplacer les miroirs par rapport à la caméra.

Ainsi le dispositif objet de l'invention présente des avantages particulièrement intéressants dont le principal est la grande souplesse d'utilisation. En effet, comme la caméra est séparée de la source laser, il est facile de la déplacer afin de contrôler différents aspects d'une pièce donnée ou encore de la placer à l'intérieur d'une cavité de petites dimensions inaccessible aux appareils de l'art antérieur. C'est ainsi qu'on a réalisé une caméra conforme à celle illustrée aux figures 3 et 4, dont les dimensions extérieures sont d'environ 270 x 520 x 940 mm et qui pèse environ 37 kg alors que les dispositifs de l'art antérieur ont des dimensions qui sont toutes supérieures à 1 mètre et pèsent plus d'une tonne.

D'autre part, comme le faisceau laser est transmis de la source à la caméra par un faisceau de fibres optiques ordonnées, la transmission se fait quelle que soit la disposition de ce faisceau dans l'espace. Il n'est donc plus nécessaire d'effectuer des opérations longues et délicates comme le réglage de la position de miroirs. L'utilisation d'un faisceau de fibres optiques permet en outre d'utiliser le dispositif dans des endroits relativement difficiles d'accès ou dans des endroits où il y a des obstacles entre la source laser et la caméra comme cela est illustré à la figure 1.

De plus, l'utilisation d'un faisceau comportant un très grand nombre de fibres ordonnées de petit diamètre permet la transmission d'un faisceau laser de forte puissance sans dégrader le faisceau de fibres, ni le faisceau laser.

On a réalisé un certain nombre d'expériences avec un faisceau de fibres optiques ordonnées commercialisé par la Société BODSON sous la référence IG 445-108. La vue en coupe de la figure 8 illustre schématiquement la composition d'un tel câble. On voit que le câble 8 est constitué d'un ensemble de fibres élémentaires 9 dont chacune est constituée d'un coeur 11 entouré d'une gaine 13, l'ensemble des fibres étant entouré d'une enveloppe extérieure 15. Pour la clarté du dessin, les échelles n'ont pas été respectées sur la figure 8 : en réalité, le diamètre des fibres est de l'ordre de quelques microns. Le faisceau utilisé comportait environ 100 000 fibres de 10 $\mu$m de diamètre constituées d'un coeur en verre et d'une gaine en un verre ayant un indice de réfraction inférieur au premier.

Avec un tel faisceau de fibres, on a pu constater que la cohérence temporelle du faisceau laser est conservée et que la cohérence spatiale est très rapidement reconstituée après la sortie du faisceau de fibres. En effet, le nombre de modes qui peuvent se propager dans chaque fibre unitaire est faible : leur faible diamètre et leur gradient d'indice, qui entraînent une faible ouverture numérique, font que ces fibres unitaires se comportent pratiquement comme des fibres "monomodes". Les chemins parcourus par le faisceau laser dans chacune des fibres du faisceau sont donc pratiquement égaux, ce qui permet de conserver la cohérence spatiale. De plus, la tenue en énergie est très élevée, car la densité d'énergie au niveau de chaque fibre est très faible en raison du grand nombre de fibres unitaires.

De plus, la faible ouverture numérique du faisceau de fibres n'impose que l'emploi d'optiques de diamètre réduit conduisant avantageusement à la compacité de l'ensemble.

On a également pu constater que les interférogrammes sont réalisables même si le faisceau de fibres bouge entre deux prises de vue ou même éventuellement pendant les prises de vue. En effet, si certains sauts de modes peuvent se produire dans certaines fibres au cours du mouvement, l'énergie en sortie du faisceau est la somme de l'énergie émise par chacune des fibres (dont le nombre est de l'ordre de 100 000 ou davantage) et on a donc un phénomène de lissage du front d'énergie : le contraste de frange est donc très bon.

De plus, comme le faisceau de fibres a des dimensions relativement importantes (par exemple section utile de 4 mm x 4 mm dans l'exemple cité plus haut), il n'est pas nécessaire de focaliser le faisceau laser à l'entrée du câble de fibres optiques, mais simplement de le faire converger. En effet, dans les dispositifs de l'art antérieur, en raison de la très faible section des fibres, il est nécessaire de focaliser le faisceau laser à l'entrée : ceci provoque une forte concentration d'énergie qui peut entraîner une ionisation de l'air et provoquer des claquages risquant de détruire les fibres.

Enfin, le fait qu'on utilise un câble à fibres optiques uniquement en amont de la séparatrice, en suivant le sens de propagation du faisceau laser, permet d'éliminer tous les inconvénients de l'art antérieur qui ont été exposés au début de la présente description. La séparation en faisceau de référence et en faisceau objet après transport du faisceau laser permet de disposer de deux fronts d'ondes beaucoup plus semblables entre eux et interférant d'autant mieux. A titre d'essai, on a réalisé des hologrammes et interférogrammes couvrant des surfaces de 1 m × 1 m pour une énergie laser initiale de 280 millijoules conférant une énergie de 120 millijoules en sortie du faisceau de fibres.

Il est bien entendu que l'invention ne se limite pas aux seuls modes de réalisation qui viennent d'être décrits, mais qu'on peut envisager des variantes sans sortir pour autant du cadre de l'invention. Le dispositif objet de l'invention peut être utilisé quelle que soit la constitution de la source laser et/ou de la caméra. C'est ainsi qu'on peut utiliser des sources laser pulsées telles que les lasers à rubis, YAG, ou à vapeur de cuivre. Quant au faisceau de fibres, les matières constituant le coeur des fibres ou la gaine sont adaptées en fonction du spectre d'absorption de ceux-ci et du laser que l'on souhaite utiliser. Il est toutefois à noter que le diamètre du coeur des fibres élémentaires doit être le plus faible possible et les indices de réfraction adaptés pour se rapprocher le plus possible du fonctionnement "monomode". Quant au rapport entre le diamètre du coeur et l'épaisseur de la gaine, il doit être le plus grand possible, afin d'optimiser le coefficient de remplissage du faisceau avec les coeurs des fibres. Le nombre des fibres élémentaires, tout en restant très grand, peut être modifié en fonction de l'énergie à transmettre.

Quant à la longueur du faisceau, elle peut être quelconque et varier suivant l'environnement de la pièce à contrôler et la présence ou l'absence d'obstacles au voisinage de celle-ci, mais, de toute façon, elle reste liée à l'atténuation acceptable dans ledit faisceau et à la puissance de l'émetteur utilisé. Quant à sa section, elle peut être quelconque (circulaire, rectangulaire, carrée, etc.)

Les applications de l'invention sont nombreuses et concernent tous les dispositifs d'holographie fixes ou mobiles. Par exemple, on peut installer la source laser et la caméra sur un véhicule (figure 1), ce qui permet d'amener l'ensemble du dispositif aux différents endroits où les hologrammes sont à faire, la source laser restant sur le véhicule et la caméra étant placée aux différents endroits à observer. Le dispositif objet de l'invention s'applique pour tout contrôle non destructif par interférométrie, comme par exemple les méthodes d'holographie ou les méthodes dites de Speckle, Mach-Zender, Shadow, Michelson, etc., ou encore la cinéholographie (technique du cinéma en relief) et la cinéinterférométrie (technique de contrôle ou de caractérisation dans le temps par interférométrie holographique).

## Revendications

1. Dispositif de contrôle non-destructif d'une pièce (6) par holographie optique comprenant :
   - une source (2) émettant un faisceau laser;
   - une caméra holographique (4), placée à distance de ladite source (2), cette caméra (4) comprenant au moins :
     - une entrée pour le faisceau laser (28) ;
     - des moyens (44) pour séparer le faisceau laser (28) en un faisceau de référence (43) et un faisceau objet (45); et
     - des moyens pour créer un hologramme de la pièce à contrôler à partir du faisceau de référence (43) et du faisceau objet (45); et
   - des moyens pour amener le faisceau laser de la source (2) jusqu'à ladite entrée, constitués par un guide de lumière à fibres optiques ;
   caractérisé en ce que ledit guide à fibres optiques est constitué par un faisceau de fibres optiques ordonnées (8) dans lequel chacune des fibres reste dans la même position relative par rapport aux fibres voisines tout le long dudit faisceau et chacune des fibres est choisie de façon à se rapprocher le plus possible du fonctionnement monomode de manière que ledit faisceau de fibres soit apte à transmettre un faisceau laser de forte puissance tout en maintenant la cohérence temporelle et spatiale de ce faisceau laser.

## Claims

1. Device for the non-destructive testing of a part (6) by optical holography comprising a source (2) emitting a laser beam, a holographic camera (4) placed at a distance from the said source (2), in which the said camera (4) has at least one entrance for the laser beam (28), means (44) for splitting the laser beam (28) into a reference beam (43) and an object beam (45) and means for creating a hologram of the part to be inspected on the basis of the reference beam (43) and the object beam (45), as well as means for bringing the laser beam from the source (2) to the said entrance, constituted by an optical fibre light guide, characterized in that said optical fibre light guide is constituted by a bundle (8) of sequenced optical fibres, in which each of the fibres remains in the same relative position with respect to the adjacent fibres along the said bundle and each of the fibres is chosen in such a way as to come as close as possible to monomode operation, so that said fibre bundle is able to transmit a high power laser beam, whilst maintaining the time and space cohesion of said laser beam.

**Patentansprüche**

1. Vorrichtung zur zerstörungsfreien Kontrolle eines Werkstücks (6) durch optische Holographie mit:
   - einer ein Laserlichtbündel emittierenden Quelle (2);
   - einer holographischen Kamera (4), die in einem Abstand von dieser Quelle (2) angeordnet ist, wobei diese Kamera (4) wenigsten umfaßt:
     - einen Eingang für das Laserlichtbündel (28);
     - eine Vorrichtung (44) zum Teilen des Laserlichtbündels (28) in einen Referenzstrahl (43) und in einen Objektstrahl (45); und
     - eine Vorrichtung zum Erstellen eines Hologramms des zu kontrollierenden Werkstücks ausgehend von dem Referenzstrahl (43) und dem Objektstrahl (45); und
   - einer Vorrichtung zum Führen des Laserlichtbündels von der Quelle (2) bis zu dem Eingang, die aus einem Lichtleiter aus optischen Fasern besteht;
   dadurch gekennzeichnet, daß der Lichtleiter aus optischen Fasern aus einem Bündel geordneter optischer Fasern (8) besteht, in dem jede der Fasern in derselben Stellung bezüglich den benachbarten Fasern entlang des gesamten Bündels bleibt, und daß jede der Fasern so ausgewählt ist, daß sie sich so weit wie möglich derart der Monomodenfunktion annähert, daß das Faserbündel geeignet ist, eine Laserlichtbündel hoher Leistung zu übertragen, wobei die zeitliche und räumlich Kohärenz des Laserlichtbündels bewahrt bleibt.

FIG. 1

FIG. 2

FIG. 7

EP 0 234 982 B1

**FIG. 3**

FIG. 8

FIG. 4

EP 0 234 982 B1

FIG. 5

FIG. 6